# EUROPEAN PATENT SPECIFICATION

(11) **EP 4 285 796 B1**
(45) Date of publication and mention of the grant of the patent: **28.01.2026**
(21) Application number: 22175976.4
(22) Date of filing: 30.05.2022
(51) Int. Cl.: A47J 43/044, A47J 43/08

(54) **CONTAINER COVER OF AN ELECTRIC HOUSEHOLD APPLIANCE, ASSEMBLING METHOD, AND HOUSEHOLD APPLIANCE**
BEHÄLTERDECKEL EINES ELEKTRISCHEN HAUSHALTSGERÄTES, MONTAGEVERFAHREN UND HAUSHALTSGERÄT
COUVERCLE DE RÉCIPIENT D'UN APPAREIL ÉLECTROMÉNAGER, PROCÉDÉ D'ASSEMBLAGE ET APPAREIL ÉLECTROMÉNAGER

(43) Date of publication of application: 06.12.2023
(73) Proprietor: BSH Hausgeräte GmbH, 81739 München (DE)
(72) Inventor: Zupanc, Anze, 2380 Slovenj Gradec (SI); Cavrgov, Tomislav, 2000 Maribor (SI)

(56) References cited:
- EP-A1- 2 858 542
- WO-A1-2013/170459
- US-A- 3 302 894
- US-A1- 2021 251 429

## Description

The invention refers to a container cover of a motor driven electric household appliance, to an assembly method and to a motor driven electric household appliance.

In general, a container cover of a motor driven electric household appliance such as a hand blender, hand mixer or chopper, provides a gear box in which a gear unit is positioned in order to transfer the rotating speed of a drive shaft of the motor to a tool shaft of a respective tool inside the container. In use, a tool is connected to a clutch which acts together with the gear unit and the cover is put on the cup-shaped container such that the container is closed during food processing. In order to drive the tool, the motor is connected to a gear shaft opposite to the container. After use the cover is cleaned up in order to remove impurities caused by the processing of the food. It has been shown that during cleaning, water can enter into the gear box, thus reducing the lifespan of the gear unit. WO 2013/170459 A1 discloses a container cover comprising a gear box.

It is an object of the invention to provide a container cover of a motor driven electric household appliance having a gear box which is dishwasher safe, a technical easy assembly method in order to assembly such container cover and a motor driven electric household appliance which container cover having a gear box inside is dishwasher safe. This object is solved by a container cover with the features of claim 1, by an assembly method according to claim 6, and by a motor driven electric household appliance with the features of claim 7. Advantageous embodiments are disclosed in the dependent claims, the description and the figures.

According to the invention, a container cover of a motor driven electric household appliance such as a hand blender, hand mixer or chopper, is adapted to be put on a food container and to receive the motor opposite to the food container. The cover comprises an upper part and a lower part which can be joined together and form a gear box for receiving a gear unit, a bearing and a clutch unit in order to transfer the rotating speed and the torque of a motor shaft of the motor to a tool shaft of a respective tool inside the container. The upper part has an upper opening in order to guide an upper coupling section of a gear shaft out of the gear box which is adapted to be coupled with the motor shaft directly or indirectly. The lower part has a lower opening in order to guide a lower coupling section of the clutch out of the gear box which is adapted to be coupled with the tool shaft directly or indirectly. An upper seal is directed to the upper opening and a lower seal is directed to the lower opening such that a penetration of water into the gear box is prevented. Exemplary seal are annular rings, consisting of an adequate seal material and having an L-shaped or U-shaped cross-section, whereas a V-shaped seal is preferred.

Due to the seals, the gear box is protected against water penetration such that the cover can be put into a dishwasher for cleaning or can be cleaned manually via water. As a bearing for the gear shaft is positioned inside the gear box, a precise rotation of the gear shaft is realised.

In a preferred embodiment, the upper coupling section of the gear shaft is formed integrally with the gear shaft. In order to put the upper section through the upper opening, the upper opening has radial recess(s) adapted to put a respective coupling element of the upper coupling section through. In order to avoid a water penetration through the recess(es), the upper seal extends over the recess(es) radial inwards until it is in seal contact with the gear shaft extending through the upper opening.

The size of the gear box can be reduced if the clutch unit acts as gear unit holder. Thus, a separate gear unit holder can be omitted.

Preferably, the upper part and the lower part of the cover are adapted to be joined together by material closure, for instance via ultrasonic welding or bonding. Such joints are easy to install and reliable, in particular water resistant.

Alternatively, in order to have access to the gear unit or the bearing inside the gear box after the assembly without destroying the joint, the upper part and the lower part of the cover are adapted to be joined together by releasable form fit. One example is a bayonet system, wherein then a further seal is preferred in order to avoid any leakage due the form fit.

According to an inventive assembly method for such a container cover, a gear unit, a bearing, a clutch unit, an upper seal and a lower seal is positioned in an opened gear box of the cover. Then, the gear box is closed by joining an upper part of the cover and a lower part of the cover together.

The assembly is easy to execute, characterised by a reduced number of parts, and is applicable for automation.

An inventive motor driven electric household appliance comprising an inventive container, such enabling a quick and easy cleaning of the household appliance.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Fig. 1: a sectional view of a preferred motor driven electric household appliance according to the invention,
- Fig. 2: an enlarged view of an inventive container cover shown in figure 1,
- Fig. 3: an exploded view of the container cover, and
- Fig. 4: a top view of an upper opening of an upper part of the container cover.

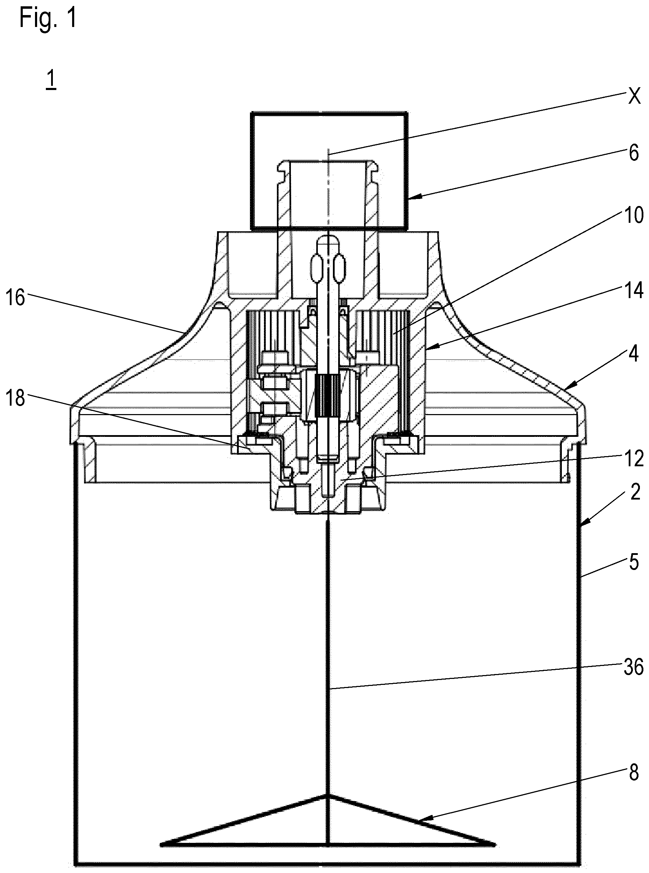

In figure 1, a schematic view of a preferred embodiment of an electric household appliance 1 according to the invention appliance is shown. The electric household appliance 1 is a hand blender, for instance, and has a food container 2, a container cover 4, an electric motor 6 or a drive unit (not shown) comprising an electric motor 6 and a tool 8, for instance a knife.

The food container 2 is releasably closed by the cover 4 that rests on a wall 5 of the container 2 and supports the motor 6. Thus, the cover 4 is positioned between the container 2 and the motor 6. The tool 8 is positioned inside the container 2 and driven by the motor 6. In the shown embodiment, the tool 8 is a cutting tool that rotates around a vertical orientated rotation axis X of the household appliance 1.

In order to drive the tool 8 by the motor 6, a gear unit 10 and clutch unit 12 are provided in an area of the cover 4. The area of the cover 4 is a gear box 14 which is formed by a middle section of an upper part 16 of the cover 4 and by a lower part 18 of the cover 4.

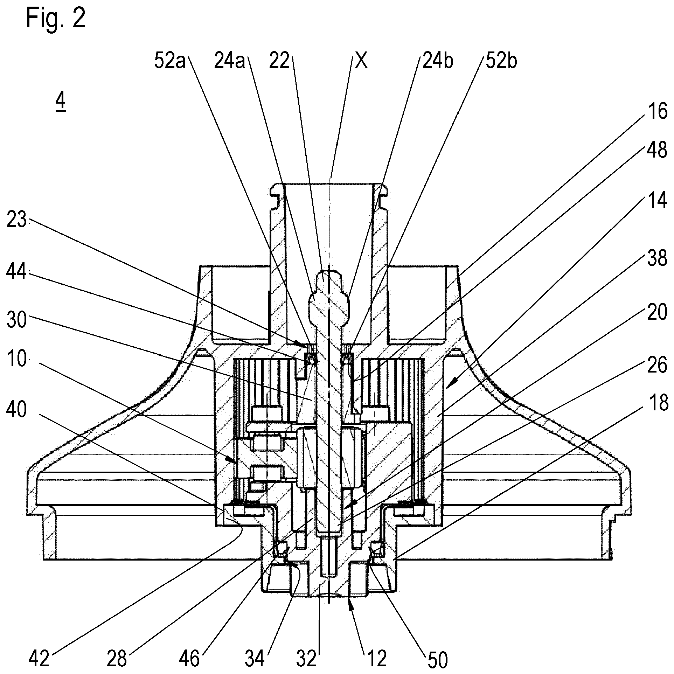

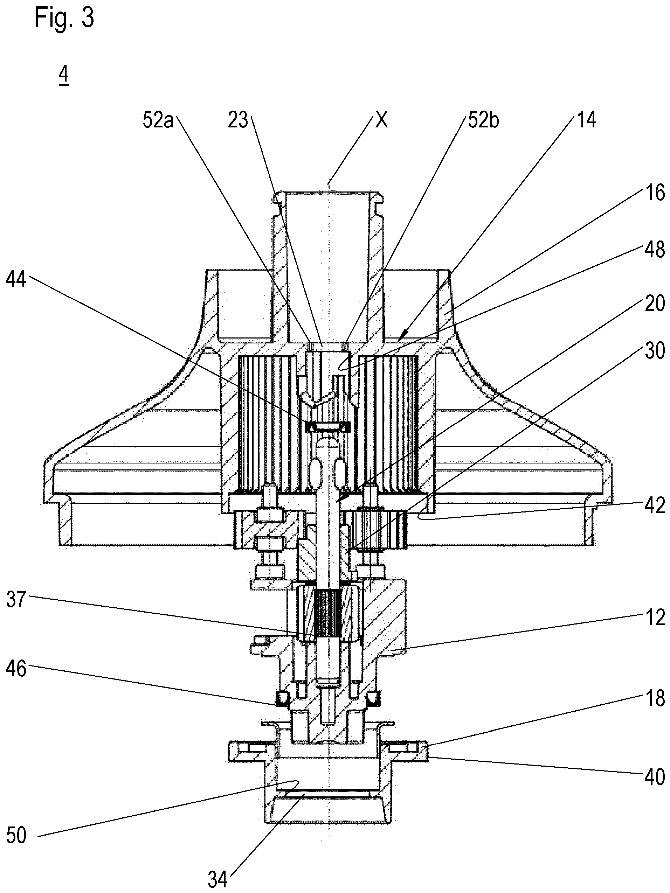

As shown in figures 2 and 3, the gear unit 10, for instance a planetary gear, has a gear shaft 20 that has an upper coupling section 22. The upper coupling section 22 is guided out of the gear box 14 through an upper opening 23 and is adapted to be connected to a not shown motor shaft of the motor 6 via releasable form-fit. In the shown embodiment, the upper coupling section 22 has two plate-like coupling elements 24a, 24b. The coupling elements 24a, 24b are integrally formed with the gear shaft 20 and extend radially opposed to each other from the gear shaft 20. They are positioned in one single plane, which is according to the shown orientation of the container cover 4 in the figures a vertical plane. In addition, the gear shaft 20 has a lower coupling section 26 which is in torque proof engagement with an upper counter section 28 of the clutch unit 12. The gear shaft 20 is supported by a bearing 30 inside the gear box 14 between its upper coupling section 22 and its lower coupling section 26.

Beside the upper counter section 28 for the lower coupling section 26 of the gear shaft 20, the clutch unit 12 also has a lower coupling section 32. The lower coupling section 32 of the clutch unit 12 extends through a lower opening 34 out of the gear box 14 and is provided to be in releasable form-fit engagement with a tool shaft 36, exemplary shown in figure 1. Further on, the clutch unit 12 supports the gear unit 10 in the gear box 14, such that the clutch unit 12 acts as a gear holder. Thus, the gear unit 10 is guided inside the gear box 14 at two positions; the bearing 30 guides the gear shaft 20 at its upper end close to the upper opening 23, and the clutch unit 12 guides the gear shaft 20 at its lower end close to the lower opening. The gear shaft 20 provides a pinion 37 in order to act together with gear wheels of the gear unit 10.

As mentioned before, the gear box 14 is provided by a middle area of the upper part 16 of the cover 4 by the lower part 18 of the cover 4. In particular, according to the embodiment shown in the figures 2 and 3, the upper part 16 has a cylindrical protrusion 38 extending downwards from the upper part 16 along the rotation axis Z. The protrusion 38 forms a room which is opened at its lower end and acts as a wall of the gear box 14. The gear box 14 is closed at its lower end by the lower part 18. The lower part 18 acts as a kind of bottom of the gear box 14. Preferably, the lower part 18 is firmly bonded, for instance via ultrasonic welding, to the protrusion 38 of the upper part 38. Thereby, it is preferred, when the lower part 18 has a circular outer bonding surface 40 and the protrusion 38 has a corresponding circular inner bonding surface 42.

The upper part 16 provides the upper opening 23 and the lower part 18 provides the lower opening 34. In order to avoid any penetration of water through at least one of these openings 23, 34, an upper seal 44 and a lower seal 46 are provided. The upper seal 44 has an annular shape and is in water resistant contact with an inner circumferential surface 48 inside the gear box 14 directly beyond the upper opening 23 and with an outer circumferential surface of the gear shaft 20. In a cross section and in the preferred embodiment shown here, the upper seal 44 has a V-like shape. The lower seal 46 has also an annular shape and is in water resistant contact with an inner circumferential surface 50 inside the gear box 14 directly above the lower opening 34 and with an outer circumferential surface of the clutch unit 12. In a cross section and in the preferred embodiment shown here, the lower seal 46 has a V-like shape or a U-like shape, for instance. Preferably, the lower seal 46 is supported by the clutch unit 12, thus facilitating an assembly of the cover 4. In other words, the upper seal 44 an the lower seal 46 are fixed axially inside the gear box 14 between counterfaces of the upper part 16 and of the lower part 18, which form the upper opening 23 and the lower opening 34. Thereby, they are in direct contact with the bearing 30 and with the clutch unit 12.

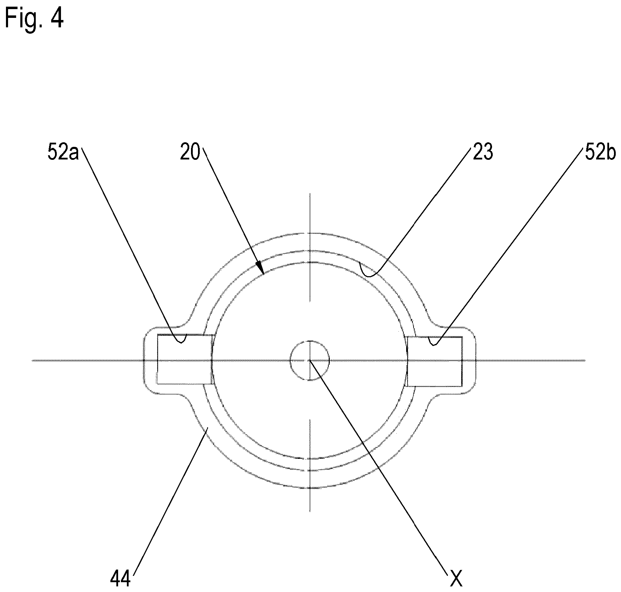

In order to enable the assembly from the inside to the outside of the opened gear box 14, the upper opening 23 has two radial recesses 52a, 52b (Figure 4). The recesses 52a, 52b are opposed to each other and have a shape that correspondents to the plate-like shape of the coupling elements 24a, 24b. To avoid any penetration of water through these recesses 52a, 52b, the upper seal 44 extends radially over these recesses 52a, 52b as well.

According to a preferred assembly method of the container cover 4, the gear unit 10, the bearing 30, the clutch unit 12, the upper seal 44 and the lower seal 46 are positioned in the opened gear box 14, provided by the protrusion 38 of the upper part 16 of the cover 4. Afterwards, the gear box 14 is closed by material joining the lower part 18 of the cover 4 to the opened lower end of the protrusion 38 of the upper part 18 of the cover 4.

Disclosed are a container cover of a motor driven electric household appliance such as a hand blender, hand mixer or chopper, wherein the cover provides a gear box which is protected against water penetration, an assembly method and an electric household appliance.

### Reference list

- 1: household appliance
- 2: food container
- 4: container cover
- 5: wall of the container
- 6: electric motor
- 8: tool
- 10: gear unit
- 12: clutch unit
- 14: gear box
- 16: upper part of the cover
- 18: lower part of the cover
- 20: gear shaft
- 22: upper coupling section
- 23: upper opening
- 24a, b: coupling element
- 26: lower coupling section
- 28: upper counter section
- 30: bearing
- 32: lower coupling section
- 34: lower opening
- 36: tool shaft
- 37: pinion
- 38: protrusion
- 40: circular inner bonding surface
- 42: circular outer bonding surface
- 44: upper seal
- 46: lower seal
- 48: inner circumferential surface (upper opening)
- 50: inner circumferential surface (lower opening)
- 52a, b: recess
- X: rotation axis

## Claims

1. A container cover (4) of a motor driven electric household appliance (1) such as a hand blender, hand mixer or chopper,
wherein
• the cover (4) is adapted to be put on a food container and to receive the motor opposite to the food container (2), and
• the cover (4) comprises an upper part (16) and a lower part (18) which can be joined together and form a gear box (14) comprising a gear unit (10), a bearing (30) and a clutch unit (12) in order to transfer the rotating speed and torque of a motor shaft of the motor (6) to a tool shaft (36) of a respective tool (8) inside the container (4),
wherein
• the upper part (16) has an upper opening (23) in order to guide an upper coupling section (22) of a gear shaft (20) out of the gear box (14) which is adapted to be coupled with the motor shaft directly or indirectly, and
• the lower part (18) has a lower opening (34) in order to guide a lower coupling section (32) of the clutch unit (12) out of the gear box (14) which is adapted to be coupled with the tool shaft (36) directly or indirectly, and **characterized in that**
• an upper seal (44) is directed to the upper opening (23) and a lower seal (46) is directed to the lower opening (34) such that a penetration of water into the gear box (14) is prevented.

2. The cover according to claim 1, wherein the upper opening (23) has at least one radial recess (52a, 52b) adapted to put a coupling element (24a, 24b) of the upper coupling section (22) through, wherein the upper seal (44) extends over the at least one recess (52a, 52b) radially.

3. The cover according to claim 1, wherein the clutch unit (12) acts as gear unit holder.

4. The cover according to claim 1, 2 or 3, wherein the upper part (16) and the lower part (18) are adapted to be joined together by material closure.

5. The cover according to claim 1, 2 or 3, wherein the upper part (16) and the lower part (18) are adapted to be joined together by form fit.

6. An assembly method for a container cover (4) according to any of the preceding claims, comprising the steps:
• positioning a gear unit (10), a bearing (30), a clutch unit (12) and an upper seal (44) and a lower seal (46) in opened gear box (14) of the cover (4), and
• closing the gear box (14) by joining an upper part (16) of the cover (4) and a lower part (18) of the cover (4) together.

7. A motor driven electric household appliance (1) comprising a container cover (4) according to one of the preceding claims 1 to 5.

## Patentansprüche

1. Behälterdeckel (4) für ein elektrisches Haushaltsgerät (1) mit Motorantrieb wie einen Pürierstab, einen Handmixer oder einen Zerkleinerer,
wobei
• der Deckel (4) so ausgelegt ist, dass er auf einen Lebensmittelbehälter (2) aufgesetzt werden und diesem gegenüber den Motor aufnehmen kann, und
• der Deckel (4) einen oberen Teil (16) und einen unteren Teil (18) umfasst, die miteinander verbunden werden und ein Getriebegehäuse (14) bilden können, das eine Getriebeeinheit (10), ein Lager (30) und eine Kupplungseinheit (12) umfasst, damit die Drehgeschwindigkeit und das Drehmoment einer Motorwelle des Motors (6) auf eine Werkzeugwelle (36) eines jeweiligen Werkzeugs (8) in dem Behälter (4) übertragen wird,
wobei
• der obere Teil (16) eine obere Öffnung (23) aufweist, die ein oberes Kopplungssegment (22) einer Getriebewelle (20) aus dem Getriebegehäuse (14) herausführt, das so ausgelegt ist, dass es direkt oder indirekt mit der Motorwelle gekoppelt werden kann, und
• der untere Teil (18) eine untere Öffnung (34) aufweist, die ein unteres Kopplungssegment (32) der Kopplungseinheit (12) aus dem Getriebegehäuse (14) herausführt, das so ausgelegt ist, dass es direkt oder indirekt mit der Werkzeugwelle (36) gekoppelt werden kann, und
**dadurch gekennzeichnet, dass**
• eine obere Dichtung (44) zur oberen Öffnung (23) und eine untere Dichtung (46) zur unteren Öffnung (34) gerichtet ist, sodass ein Eindringen von Wasser in das Getriebegehäuse (14) verhindert wird.

2. Deckel nach Anspruch 1, wobei die obere Öffnung (23) mindestens eine radiale Aussparung (52a, 52b) aufweist, die so ausgelegt ist, dass ein Kopplungselement (24a, 24b) des oberen Kopplungssegments (22) hindurchgesteckt werden kann, wobei sich die obere Dichtung (44) radial über die mindestens eine Aussparung (52a, 52b) erstreckt.

3. Deckel nach Anspruch 1, wobei die Kupplungseinheit (12) als Träger für die Getriebeeinheit dient.

4. Deckel nach Anspruch 1, 2 oder 3, wobei der obere Teil (16) und der untere Teil (18) so ausgelegt sind, dass sie stoffschlüssig miteinander verbunden werden können.

5. Deckel nach Anspruch 1, 2 oder 3, wobei der obere Teil (16) und der untere Teil (18) so ausgelegt sind, dass sie formschlüssig miteinander verbunden werden können.

6. Montageverfahren für einen Behälterdeckel (4) nach einem der vorhergehenden Ansprüche, das folgende Schritte umfasst:
• Anordnen einer Getriebeeinheit (10), eines Lagers (30), einer Kupplungseinheit (12) und einer oberen Dichtung (44) und einer unteren Dichtung (46) im offenen Getriebegehäuse (14) des Deckels (4) und
• Verschließen des Getriebegehäuses (14) durch Verbinden eines oberen Teils (16) des Deckels (4) mit einem unteren Teil (18) des Deckels (4).

7. Elektrisches Haushaltsgerät (1) mit Motorantrieb, das einen Behälterdeckel (4) nach einem der vorhergehenden Ansprüche 1 bis 5 umfasst.

## Revendications

1. Couvercle de récipient (4) d'un appareil électroménager entraîné par moteur (1) tel qu'un mélangeur à main, un batteur à main ou un hacheur,
dans lequel
• le couvercle (4) est adapté pour être placé sur un récipient alimentaire et pour recevoir le moteur à l'opposé du récipient alimentaire (2), et
• le couvercle (4) comprend une partie supérieure (16) et une partie inférieure (18) qui peuvent être jointes ensemble et former une boîte d'engrenages (14) comprenant une unité d'engrenage (10), un palier (30) et une unité d'embrayage (12) afin de transférer la vitesse de rotation et le couple d'un arbre de moteur du moteur (6) à un arbre d'outil (36) d'un outil respectif (8) à l'intérieur du récipient (4),
dans lequel
• la partie supérieure (16) présente une ouverture supérieure (23) afin de guider une section de couplage supérieure (22) d'un arbre d'engrenage (20) hors de la boîte d'engrenages (14) qui est adaptée pour être couplée directement ou indirectement à l'arbre de moteur, et
• la partie inférieure (18) présente une ouverture inférieure (34) afin de guider une section de couplage inférieure (32) de l'unité d'embrayage (12) hors de la boîte d'engrenages (14) qui est adaptée pour être couplée directement ou indirectement à l'arbre d'outil (36), et
**caractérisé en ce que**
• un joint d'étanchéité supérieur (44) est orienté vers l'ouverture supérieure (23) et un joint d'étanchéité inférieur (46) est orienté vers l'ouverture inférieure (34) de telle sorte qu'une pénétration d'eau dans la boîte d'engrenages (14) est empêchée.

2. Couvercle selon la revendication 1, dans lequel l'ouverture supérieure (23) présente au moins un évidement radial (52a, 52b) adapté pour placer un élément de couplage (24a, 24b) de la section de couplage supérieure (22) à travers celui-ci, dans lequel le joint d'étanchéité supérieur (44) s'étend radialement sur l'au moins un évidement (52a, 52b).

3. Couvercle selon la revendication 1, dans lequel l'unité d'embrayage (12) agit comme un support d'unité d'engrenage.

4. Couvercle selon la revendication 1, 2 ou 3, dans lequel la partie supérieure (16) et la partie inférieure (18) sont adaptées pour être jointes ensemble par fermeture de matière.

5. Couvercle selon la revendication 1, 2 ou 3, dans lequel la partie supérieure (16) et la partie inférieure (18) sont adaptées pour être jointes ensemble par ajustement de forme.

6. Procédé d'assemblage pour un couvercle de récipient (4) selon l'une des revendications précédentes, comprenant les étapes consistant à :
• positionner une unité d'engrenage (10), un palier (30), une unité d'embrayage (12), un joint d'étanchéité supérieur (44) et un joint d'étanchéité inférieur (46) dans la boîte d'engrenages ouverte (14) du couvercle (4), et
• fermer la boîte d'engrenages (14) en joignant une partie supérieure (16) du couvercle (4) et une partie inférieure (18) du couvercle (4) ensemble.

7. Appareil électroménager entraîné par moteur (1) comprenant un couvercle de récipient (4) selon l'une des revendications précédentes 1 à 5.
